# EUROPÄISCHE PATENTSCHRIFT

(11) **EP 2 756 975 B1**
(45) Veröffentlichungstag und Bekanntmachung des Hinweises auf die Patenterteilung: **01.07.2015**
(21) Anmeldenummer: 13195400.0
(22) Anmeldetag: 03.12.2013
(51) Int. Cl.: B60H 1/34, B29C 45/00, B21D 53/88

(54) **Lamelle, Verfahren zur Montage einer Lamelle, Spritzgussform und Verfahren zur Herstellung eines Bauteils einer Lamelle**
Lamella, method for mounting a lamella, injection mould and method for producing a component of a lamella
Lamelle, procédé de montage d'une lamelle, moule de moulage par injection et procédé de fabrication d'un composant d'une lamelle

(30) Priorität: 18.01.2013 DE 102013100528
(43) Veröffentlichungstag der Anmeldung: 23.07.2014
(73) Patentinhaber: TRW Automotive Electronics & Components GmbH, 78315 Radolfzell (DE)
(72) Erfinder: Demerath, Michael, 66909 Hüffler (DE); Lauhoff, Dirk, 67659 Kaiserslautern (DE)
(74) Vertreter: Prinz & Partner mbB

(56) Entgegenhaltungen:
- EP-A1- 0 888 869
- EP-A2- 1 655 160
- DE-A1-102010 032 231
- DE-U1-202004 008 181
- DE-U1-202010 005 663

## Beschreibung

Die Erfindung betrifft eine Lamelle, insbesondere für einen Luftausströmer in einem Fahrzeug, mit einem Grundkörper und einem Ansatzteil, die mittels einer mechanischen Verbindung aneinander angebracht sind, sowie ein Verfahren zur Montage einer solchen Lamelle. Die Erfindung betrifft des Weiteren eine Spritzgussform zum Spritzgießen sowie ein Verfahren zur Herstellung eines Bauteils für eine Lamelle.

Um Luftausströmer in Fahrzeugen ein hochwertiges Erscheinungsbild zu verleihen, werden die Vorderkanten der Lamellen des Luftausströmers häufig mit einer Beschichtung, beispielsweise einer Verchromung versehen. Eine teilweise Beschichtung von einteiligen Lamellen ist aber mit sehr hohem Herstellungsaufwand verbunden.

Aus diesem Grund werden Lamellen für Luftausströmer in Fahrzeugen häufig aus zwei Bauteilen zusammengesetzt. Ein erstes Bauteil bildet den Grundkörper der Lamelle, der den hinteren, überwiegend nicht sichtbaren Teil der Lamelle darstellt und aus einem günstigen Material hergestellt werden kann. An diesem Grundkörper wird als zweites Bauteil ein Ansatzteil montiert, das den vorderen, sichtbaren Teil der Lamelle bildet. Dieses Anbauteil kann beispielsweise eine Verchromung oder eine andere Oberflächenbeschichtung aufweisen, die geeignet ist, um der Lamelle ein hochwertiges Erscheinungsbild zu verleihen.

Der zweiteilige Aufbau hat den Vorteil, dass nur das Anbauteil mit einer sehr geringeren Oberfläche beschichtet werden muss und nicht die gesamte Lamelle. Das Anbauteil kann aufgrund der geringeren Oberfläche vollständig beschichtet werden, sodass ein zusätzlicher Arbeitsaufwand durch eine teilweise Beschichtung des Bauteils nicht erforderlich ist.

Aus dem Stand der Technik sind zweiteilige Lamellen bekannt, bei welchen das Anbauteil mit einer Clipverbindung am Grundkörper befestigt wird. Eine solche Lamelle ist beispielsweise in der EP 1 655 160 A2 gezeigt. Dies bietet eine schnelle und einfache Möglichkeit, die Bauteile der Lamelle aneinander zu befestigen. Solche Clipverbindungen können sich aber bei extremen Belastungen lösen. Zudem ist ein Austausch des Anbauteils, beispielsweise um das Erscheinungsbild der Lamelle bzw. des Luftausströmers zu ändern, sehr aufwendig.

Aufgabe der Erfindung ist es, eine Lamelle für einen Luftausströmer bereitzustellen, die einen sicheren Halt des Anbauteils gewährleistet und eine einfache Montage und Demontage des Anbauteils ermöglicht. Aufgabe der Erfindung ist es des Weiteren, ein Verfahren zur Montage einer solchen Lamelle bereitzustellen. Weiterhin ist es Aufgabe der Erfindung, eine Spritzgussform zum Spritzgießen eines Bauteils einer solchen Lamelle sowie ein Verfahren zur Herstellung dieses Bauteils bereitzustellen.

Zur Lösung der Aufgabe ist eine Lamelle, insbesondere für einen Luftausströmer in einem Fahrzeug, vorgesehen, mit einem Grundkörper und einem Ansatzteil, die mittels einer mechanischen Verbindung aneinander angebracht sind. Erfindungsgemäß enthält die mechanische Verbindung zumindest ein Halteelement an einem der beiden Bauteile Grundkörper und Ansatzteil und zumindest eine Aufnahme für das Halteelement an dem anderen der beiden Bauteile, wobei die Aufnahme zumindest einen Einführabschnitt, in den das Halteelement in einer Einschubrichtung eingeschoben werden kann, und zumindest einen sich daran anschließenden Halteabschnitt aufweist, in dem das Halteelement fixiert werden kann, wobei sich der Halteabschnitt im wesentlichen senkrecht zur Einschubrichtung (E) an den Einführabschnitt anschließt. Das Bauteil, an dem das Halteelement vorgesehen ist, wird mit dem Halteelement so an das zweite Bauteil angelegt, dass das Halteelement in den Einführabschnitt der Aufnahme des zweiten Bauteils hineinragt. Anschließend wird das erste Bauteil relativ zum zweiten Bauteil verschoben, so dass das Halteelement in den Halteabschnitt geschoben wird, aus dem das Halteelement nicht mehr herausgezogen werden kann, wodurch die Bauteile sicher aneinander fixiert sind. Ein Austausch des ersten Bauteils bzw. des zweiten Bauteils ist möglich, indem das Halteelement wieder in den Einführabschnitt verschoben wird, aus dem es herausgezogen werden kann. Der Halteabschnitt kann beispielsweise gegenüber dem Einführabschnitt so verengt sein, dass das Halteelement im Halteabschnitt verklemmt oder verkeilt wird.

Das Halteelement auch zumindest ein abstehendes Halteteil aufweisen und am Halteabschnitt ist ein Hinterschnitt vorgesehen, hinter dem das Halteteil eingreifen kann. Der Hinterschnitt ist vorzugsweise so ausgebildet, dass das Halteteil diesen entgegen der Einschubrichtung hintergreift und das Halteteil bzw. das Halteelement entgegen der Einschubrichtung sicher in der Aufnahme fixiert ist und nicht herausgezogen werden kann.

Das Halteelement und die Aufnahme funktioniert gewissermaßen nach dem Prinzip eines Bajonettverschluss, sodass ein reversibles Montieren der beiden Bauteile möglich ist und eine einfach zu lösende, aber sehr stabile Verbindung zwischen Grundkörper und Ansatzteil hergestellt werden kann.

Vorzugsweise ist der Halteabschnitt seitlich neben dem Einführabschnitt angeordnet. Die Montage des Grundkörpers und des Ansatzteils kann beispielsweise so erfolgen, dass diese mit korrespondierenden Anlageflächen aneinander angelegt werden und anschließend das Bauteil mit dem Halteelement seitlich verschoben wird, wobei die Anlageflächen gewissermaßen als Gleitflächen dienen. Da nur ein seitliches Verschieben erfolgt, ändert sich der Abstand der Bauteile zueinander während des Montagevorgangs nicht, so dass die Bauteile so hergestellt werden können, dass die Lamelle in montiertem Zustand keine Spalten oder Schlitze zwischen den Bauteilen aufweist.

Das Halteelement kann beispielsweise eine sich in Längsrichtung des Bauteils erstreckende, vorstehende Rippe sein, an der mehrere, insbesondere gleichmäßig verteilte Halteteile vorgesehen sind. Die Aufnahme kann beispielsweise eine in Längsrichtung verlaufende Nut sein, die mehrere, insbesondere gleichmäßig verteilte Einführabschnitte und Halteabschnitte aufweist, wobei der Abstand der Einführabschnitte dem Abstand der Halteteile entspricht. Die vorstehende Rippe mit den daran vorgesehenen Halteteilen wird so positioniert, dass die Halteteile jeweils in die Einführabschnitte eingeschoben werden können. Anschließend wird das Halteelement in Längsrichtung der Rippe bzw. des Bauteils so verschoben, dass die Halteteile hinter den Hinterschnitten der Halteabschnitte eingreifen. Die Rippe bzw. die Nut erstreckt sich vorzugsweise annähernd über die gesamte Länge des Bauteils, sodass über die gesamte Länge des Bauteils eine formschlüssige Verbindung zwischen Grundkörper und Ansatzteil hergestellt ist und das Ansatzteil sehr sicher am Grundkörper gehalten ist. Die Nut bildet beispielsweise eine durchgehende Öffnung für alle Einführabschnitte und Halteabschnitte.

Die Halteteile können seitlich und/oder in einer Einschubrichtung vom Halteelement abstehen. Diese können also abhängig von der Nut bzw. der Rastrichtung, in der das Halteelement vom Einführabschnitt in den Halteabschnitt verschoben wird, vom Halteelement abstehen. Die Halteteile können beispielsweise hakenförmig ausgebildet sein. Es ist aber auch denkbar, dass diese einen Kopf bilden, der einen größeren Querschnitt aufweist, der hinter den Hinterschnitten der Halteabschnitte eingreifen kann.

Es ist beispielsweise auch möglich, dass benachbarte Halteteile zu verschiedenen Seiten vom Halteelement abstehen.

Um die Halteteile einfacher in die Einführabschnitte der Aufnahme einschieben zu können, können diese beispielsweise eine Einführschräge aufweisen. Des Weiteren ist es denkbar, dass die Halteteile Rastlaschen aufweisen, die beim Einschieben in die Aufnahme federnd nachgeben können.

Der Einführabschnitt sowie der Halteabschnitt weisen vorzugsweise eine im Wesentlichen rechteckige Öffnung auf. Das Halteteil kann ebenfalls einen im Wesentlichen rechteckigen, insbesondere zum Einführabschnitt korrespondierenden, Querschnitt aufweisen, sodass dieses einfach in den Einführabschnitt eingeschoben werden kann.

Um das Halteelement in die Aufnahme einschieben zu können, ist die Breite des Einführabschnitts vorzugsweise größer oder gleich groß wie die Breite des Halteteils.

In montiertem Zustand der Lamelle bzw. in eingebautem Zustand in einem Luftausströmer soll ein Lösen der mechanischen Verbindung nicht oder nur gegen einen größeren Widerstand möglich sein, um ein unbeabsichtigtes Lösen der mechanischen Verbindung zu verhindern. Dies kann beispielsweise dadurch erfolgen, dass der Bauraum im Luftausströmer entgegen der Rastrichtung begrenzt ist, sodass die Bauteile nicht so weit gegeneinander verschoben werden können, dass das Halteelement in den Einführabschnitt gelangt. Alternativ ist es möglich, dass am Halteelement ein Rastelement vorgesehen ist, das in der Aufnahme, insbesondere im Halteabschnitt, verrasten kann, sodass ein erhöhter Widerstand bereitgestellt ist, um das Halteteil bzw. das Halteelement zurück in den Einführabschnitt zu verschieben.

Der Grundkörper und/oder das Ansatzteil sind vorzugsweise aus Kunststoff, insbesondere im Spritzgussverfahren, hergestellt, wobei das Ansatzteil eine Oberflächenbeschichtung, insbesondere eine Verchromung, aufweist.

Zur Lösung der Aufgabe ist des Weiteren ein Verfahren zur Montage einer erfindungsgemäßen Lamelle vorgesehen, wobei das Halteelement in einer Einschubrichtung in den Einführabschnitt eingeführt und anschließend in einer dazu im Wesentlichen senkrechten Rastrichtung verschoben wird, sodass das Halteelement in den Halteabschnitt gelangt, in dem das Halteelement fixiert ist. Dies ermöglicht eine einfache Montage des Ansatzteils am Grundkörper, wobei durch eine Bewegung entgegen der Rastrichtung auch eine Demontage der Lamelle ohne Beschädigung der Bauteile möglich ist.

Die Rastrichtung verläuft im Wesentlichen in Längsrichtung des Grundkörpers und/oder des Ansatzteils. Dies bietet den Vorteil, dass ein Verschieben der Halteelemente entgegen der Rastrichtung mit einfachen Mitteln verhindert werden kann. In eingebautem Zustand der Lamelle in einem Luftausströmer liegt die Lamelle nämlich in Längsrichtung an beiden Seiten am Gehäuse des Luftausströmers an bzw. hat nur ein geringes Spiel zu den Seitenwänden des Luftausströmers. Dieses Spiel ist so gering, dass das Ansatzteil nicht mehr so weit verschoben werden kann, dass die Halteelemente in den Einführabschnitt gelangen.

Erfindungsgemäß ist des Weiteren eine Spritzgussform zum Spritzgiessen eines der Bauteile Grundkörper oder Ansatzteil einer erfindungsgemäßen Lamelle vorgesehen, das eine Aufnahme aufweist, mit zumindest einem Formteil und einem Schieber, wobei der Schieber zwischen einer Spritzposition, in der der Schieber gemeinsam mit dem Formteil die Aufnahme freihält, und einer Entformposition verschiebbar ist. Das Formteil weist die Form des Halteelements auf und hält zumindest die Haltebereiche frei. Der Schieber ist so ausgebildet, dass dieser allein oder in Kombination mit dem Formteil die Einführbereiche freihält, wobei der Schieber entgegen der Einschubrichtung, im Wesentlichen senkrecht zur Längsrichtung des Bauteils, insbesondere vom Bauteil weg, aus der Spritzposition in die Entformposition bewegbar ist.

Mit einer solchen Spritzgussform ist eine einfache Herstellung des Bauteils der Lamelle, das eine Aufnahme aufweist, mit Einführabschnitten sowie
Halteabschnitten in einem Spritzvorgang möglich, auch wenn die Halteabschnitte Hinterschnitte aufweisen. Das Formteil hat dabei im Wesentlichen die Form des Halteelements des zweiten Bauteils der erfindungsgemäßen Lamelle, sodass durch das Formteil die Bereiche der Aufnahme, die das Halteelement in der Halteposition einnimmt, freigehalten werden. Das Formteil ist also so in der Spritzgussform angeordnet, dass dieses das Halteelement in der Halteposition definiert. Zusätzlich halten die Schieber allein oder in Kombination mit dem Formteil die Einführabschnitte frei. Das Formteil hält also zusammen mit dem Schieber die gesamte Aufnahme frei.

Nach dem Spritzgießen des Bauteils wird der Schieber entgegen der Einschubrichtung entfernt, sodass die Einführabschnitte ganz oder teilweise freigegeben sind. Das Formteil kann also analog zu einem Halteelement von den Halteabschnitten in die Einführabschnitte bewegt werden. Anschließend wird das Bauteil oder das Formteil so verschoben, dass das Formteil in die Einführabschnitte gelangt und somit das Bauteil vom Formteil getrennt werden kann, indem das Formteil durch die Einführabschnitte entfernt wird.

Das Formteil kann auch als zweiter Schieber ausgebildet sein und zwischen einer Spritzposition, in der das Formteil die Halteabschnitte freihält, und einer Entformposition bewegbar sein, in der das Formteil in die Einführabschnitte eingreift.

Das Formteil weist einen vorzugsweise konstanten Querschnitt auf, der der Form des Halteelements und/oder dem Querschnitt des Halteteils entspricht, bildet also das Halteelement ab.

Erfindungsgemäß ist des Weiteren ein Verfahren zur Herstellung eines Bauteils für eine erfindungsgemäße Lamelle vorgesehen, das eine Aufnahme aufweist, mit einer erfindungsgemäßen Spritzgussform, wobei das Verfahren die folgenden Schritte aufweist:
- der Schieber wird in die Spritzposition verschoben, in der der Schieber gemeinsam mit dem Formteil die Aufnahme freihält,
- die Spritzgussform wird mit Kunststoff gefüllt,
- nach dem Aushärten des Kunststoffs wird in einem ersten Entformungsschritt der Schieber in die Entformposition verschoben, in der die Haltebereiche freigegeben sind,
- anschließend wird das Formteil oder das Bauteil so in Längsrichtung verschoben, dass das Formteil in die Einführabschnitte eingreift und das Formteil entgegen der Einschubrichtung aus der Aufnahme entnommen.

Weitere Vorteile und Merkmale ergeben sich aus der nachfolgenden Beschreibung in Verbindung mit den beigefügten Zeichnungen. In diesen zeigen:
- Figur 1 eine erfindungsgemäße Lamelle,
- Figur 2 eine schematische Schnittansicht durch einen Luftausströmer mit mehreren erfindungsgemäßen Lamellen,
- Figuren 3a bis 3c verschiedene Ansichten des Ansatzteils der Lamelle aus Figur 1,
- Figuren 4a bis 4c verschiedene Ansichten des Grundkörpers der Lamelle aus Figur 1,
- Figuren 5a bis 5c verschiedene Schritte eines Verfahrens zur Montage der Lamelle aus Figur 1,
- Figuren 6a bis 6c verschiedene Ansichten einer alternativen Ausführungsform des Ansatzteils der Lamelle aus Figur 1,
- Figur 7a bis 7c eine schematische Darstellung sowie Schnittansichten einer Spritzgussform zum Spritzgießen eines Bauteils der Lamelle aus Figur 1,
- Figuren 8a und 8b verschiedene Positionen eines Formteils sowie eines Schiebers der Spritzgussform aus Figur 7, und
- Figuren 9a bis 9c verschiedene Schritte des Herstellungsverfahrens einer Lamelle aus Figur 1 mit einer Spritzgussform gemäß Figur 7.

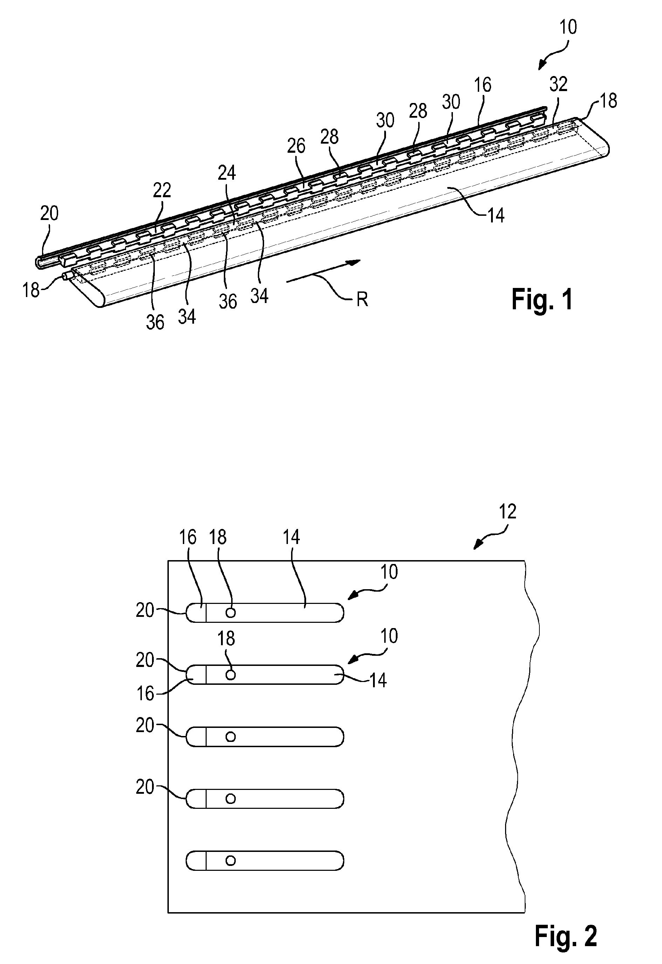

In Figur 1 ist eine Lamelle 10 für einen in Figur 2 schematisch dargestellten Luftausströmer 12 gezeigt. Die Lamelle 10 hat einen Grundkörper 14 sowie ein Ansatzteil 16, das mittels einer mechanischen Verbindung am Grundkörper 14 befestigt werden kann. Am Grundkörper 14 sind Lagerungen 18 vorgesehen, die durch in Längsrichtung R vorstehende Bolzen gebildet sind. Mit diesen Lagerungen 18 kann die Lamelle 10 schwenkbar in einem Luftausströmer 12 montiert werden.

Wie in Figur 2 zu sehen ist, ist das Ansatzteil 16 am vorderen Rand des Grundkörpers 14 montiert, sodass dieses die vordere Kante 20 der Lamelle 10 bildet. In eingebautem Zustand ist von der Lamelle 10 im Wesentlichen diese vordere Kante 20 zu sehen, also lediglich das Ansatzteil.

Bei solchen Luftausströmers 12 für Fahrzeuge ist ein hochwertiges Erscheinungsbild erwünscht, das beispielsweise durch eine Beschichtung, insbesondere eine Verchromung der vorderen Kante 20 der Lamelle 10 erreicht wird. Ein vollständiges Beschichten einer einteiligen Lamelle ist aber aus Kostengründen nicht erwünscht, da bei einem solchen Verfahren auch die Teile der Lamelle 10 beschichtet würden, die nicht sichtbar sind. Ein teilweises Beschichten einer einteiligen Lamelle wäre aber mit einem erhöhten Fertigungsaufwand verbunden.

Aus diesem Grund wird die vordere Kante 20 einer solchen Lamelle durch ein zweites, spearates Bauteil, also das Ansatzteil 16, gebildet. Dieses kann separat beschichtet werden, wobei sich der Materialaufwand zur Beschichtung aufgrund der geringeren Oberfläche des Bauteils reduziert. Beide Bauteile werden separat hergestellt und anschließend mit einer mechanischen Verbindung aneinander befestigt.

Die mechanische Verbindung der beiden Bauteile ist durch ein am Ansatzteil 16 vorgesehenes Halteelement 22 sowie eine am Grundkörper 14 vorgesehene Aufnahme 24 gebildet. Das Halteelement 22 kann in die Aufnahme 24 eingeschoben werden und, wie im Folgenden erläutert wird, in dieser fixiert werden.

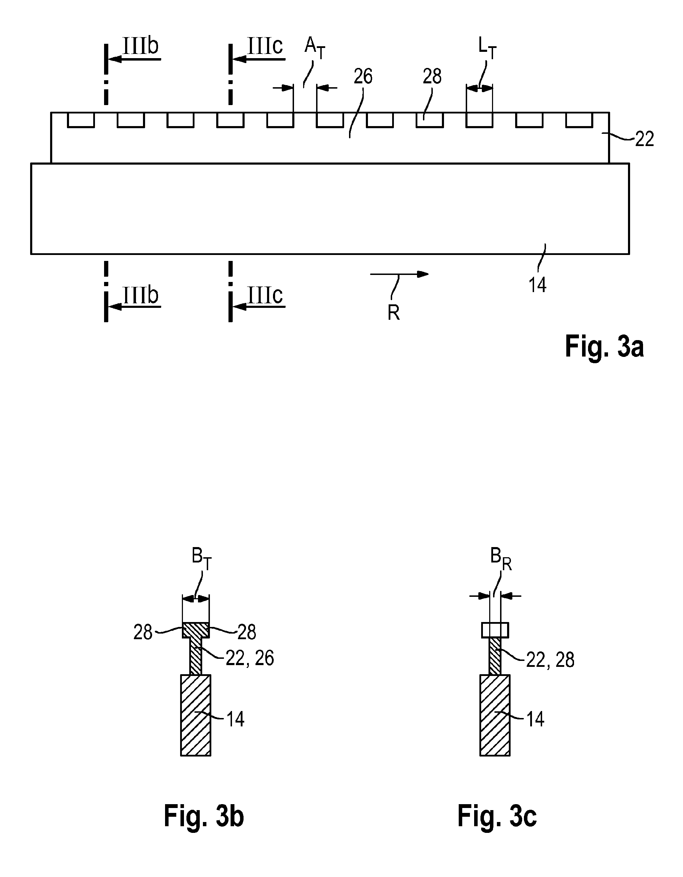

Wie in den Figuren 3a bis 3c zu sehen ist, weist das Halteelement eine in Längsrichtung R laufende, vorstehende Rippe 26 mit einer Breite B_{R} auf, von der in regelmäßigen Abständen Halteteile 28 vorstehen. In der hier gezeigten Ausführungsform sind diese durch rechteckige Vorsprünge gebildet, die beidseitig von der Rippe 26 vorstehen und eine Breite B_{T} aufweisen. Zwischen den Halteteilen 28 sind jeweils Aussparungen 30 gebildet (Figur 3c).

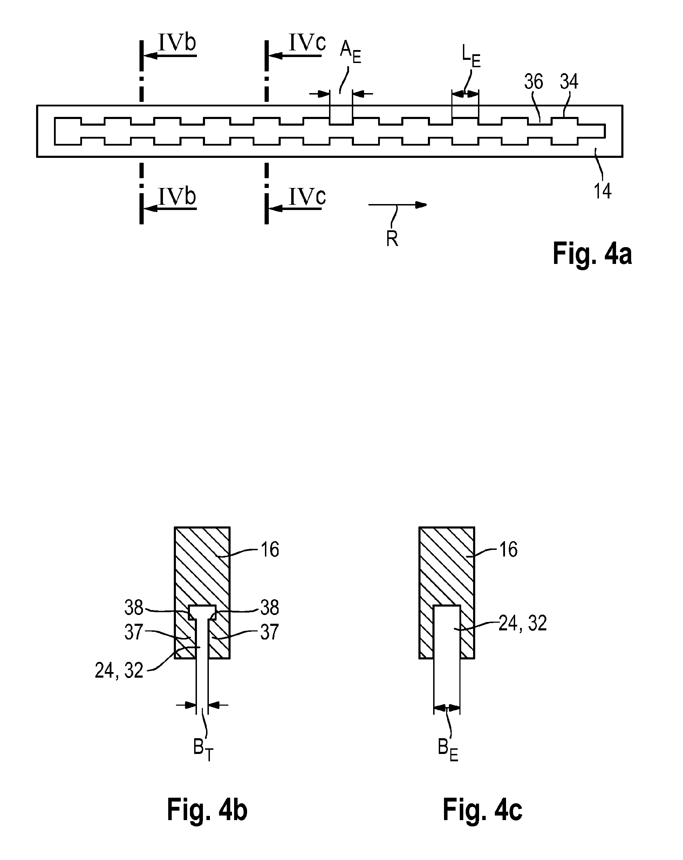

Die Aufnahme 24 weist eine in Längsrichtung R verlaufende Nut 32 auf, die mehrere Einführabschnitte 34 sowie Halteabschnitte 36 aufweist. In Längsrichtung R wechseln sich jeweils Einführabschnitte 34 und Halteabschnitte 36 ab (Figur 4a).

Die Länge L_{E} der Einführabschnitte 34 entspricht der Länge L_{T} der Halteteile 28 bzw. ist geringfügig größer als diese. Ebenso ist die Breite B_{E} der Einführabschnitte 34 gleich groß bzw. geringfügig größer als die Breite B_{T} der Halteteile (Figur 3b). Der Abstand A_{E} der Einführabschnitte 34 entspricht dem Abstand A_{T} der Halteteile 28.

Im Bereich der Halteabschnitte 36 sind in der Nut Vorsprünge 37 vorgesehen, durch die Hinterschnitte 38 gebildet sind. Der Abstand der Vorsprünge 37 bzw. die Breite B_{H} der Nut 32 in den Halteabschnitten ist kleiner als die Breite B_{T} der Halteteile 28, aber geringfügig größer als die Breite B_{R} der Rippe 26 bzw. des Halteelements 22.

Das heißt, ein Halteteil 28 kann, wenn es sich im Halteabschnitt 36 befindet, aufgrund der größeren Breite B_{T} nicht entgegen einer Einschubrichtung E aus einem Halteabschnitt 36 herausgezogen werden. In die Einführabschnitte 34 kann ein Halteteil 28 dagegen in Einschubrichtung E hineingeschoben bzw. entgegen der Einschubrichtung E aus dieser herausgezogen werden.

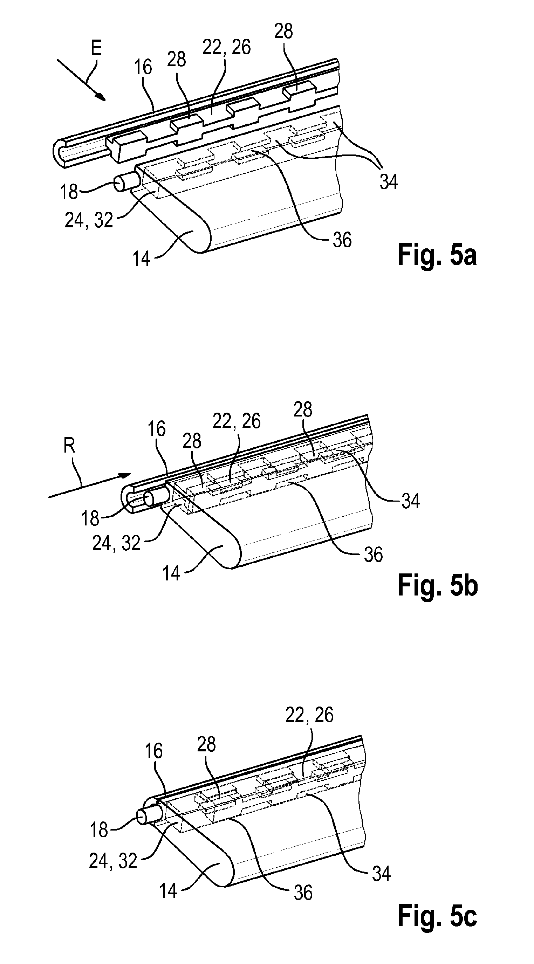

Das Ansatzteil 16 sowie der Grundkörper 14 haben korrespondierende Anlageflächen 40, 42, die in Längsrichtung R verlaufen. Zur Montage des Ansatzteils 16 am Grundkörper 14 wird das Ansatzteil 16 mit dem Halteelement 22 in einer Einschubrichtung E an den Grundkörper 14 angesetzt, wobei das Halteelement 22 mit den Halteteilen 28 in die Einführabschnitte 34 der Nut 32 bzw. der Aufnahme 24 eingeschoben wird (Figur 5a).

Liegen das Ansatzteil 16 und der Grundkörper 14 mit den Anlageflächen 40, 42 bündig aufeinander auf, wird das Ansatzteil 16 in einer Rastrichtung, die in dieser Ausführungsform der Längsrichtung R entspricht, verschoben, wobei die Halteteile 28 bzw. das Halteelement 22 so verschoben wird, dass das Halteelement 22 mit den Halteteilen 28 aus den Einführabschnitten 34 in die seitlich anschließenden Halteabschnitte 36 gelangt (Figur 5b).

In dieser Position befinden sich die Halteteile 28 hinter den Hinterschnitten 38, sodass das Ansatzteil 16 nicht entgegen der Einschubrichtung E aus der Aufnahme 24 herausgezogen werden kann (Figur 5c). Das Ansatzteil 16 ist somit sicher am Grundkörper 14 befestigt.

Die mechanische Verbindung funktioniert nach dem Prinzip einer Bajonettverbindung, indem ein Halteelement 22 in eine Aufnahme 24 eingeschoben wird, die einen Hinterschnitt 38 aufweist, hinter dem das Halteelement 22 fixiert werden kann. Im Gegensatz zu einem Bajonettverschluss erfolgt das Fixieren allerdings nicht durch eine Drehbewegung sondern dadurch dass das Halteelement 22 geradlinige in der Aufnahme verschoben wird.

In eingebautem Zustand der Lamelle 10 im Luftausströmer 12 ist ein Verschieben des Ansatzteils 16 entgegen der Rastrichtung R nicht möglich, da die Seitenwände des Luftausströmers 12 ein solches Verschieben verhindern.

Zusätzlich kann am Halteelement 22 ein Rastelement vorgesehen sein, das in der Aufnahme 24, insbesondere in einem der Halteabschnitte 36 verrasten kann. Ein solches Rastelement kann auch an den Halteteilen 28 vorgesehen sein.

In der gezeigten Ausführungsform sind die Einführabschnitte 34 bzw. die Halteabschnitte 36 rechteckig ausgebildet bzw. weisen eine rechteckige Öffnung auf. Ebenso haben die Halteteile 28 einen im Wesentlichen rechteckigen, insbesondere zum Einführabschnitt 34 korrespondierenden Querschnitt, sodass diese einfach in die Einführabschnitte 34 eingeschoben werden können.

Die Form der Einführabschnitte 34 bzw. der Halteabschnitte 36 kann allerdings beliebig angepasst werden. Ebenso können die Halteteile 28 eine beliebige andere Form aufweisen, um an den Halteabschnitten 36 eingreifen zu können. Es ist lediglich sicherzustellen,I dass die Einführabschnitte 34 und die Halteabschnitte 36 so dimensioniert sind, dass das Halteelement 22 bzw. die Halteteile 28 in die Einführabschnitt 34 eingeschoben und in den Halteabschnitten 36 fixiert werden können.

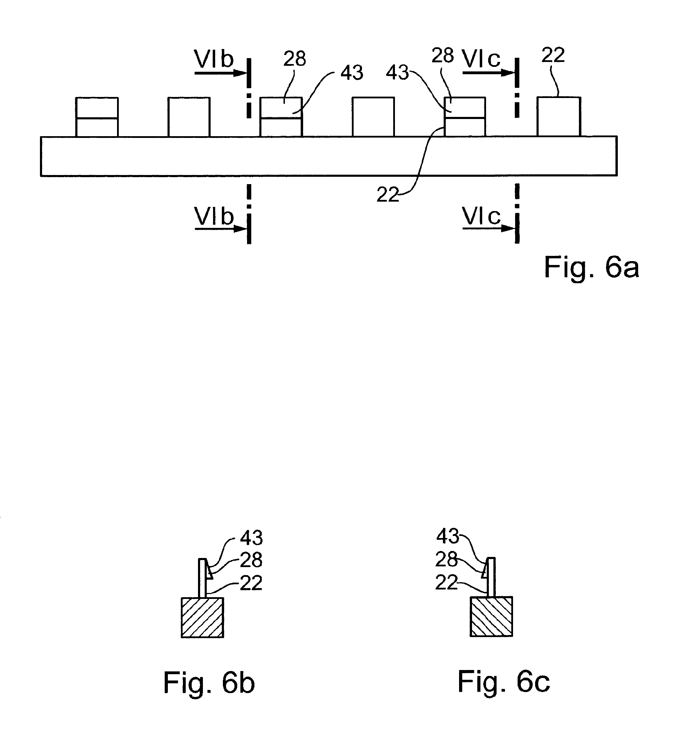

Eine zweite Ausführungsform eines erfindungsgemäßen Halteelements 22 ist in den Figuren 6a bis 6c dargestellt. In dieser Ausführungsform sind mehrere, in Längsrichtung L hintereinanderliegende Halteelemente 22 vorgesehen, an welchen jeweils nur ein Halteteil 28 vorgesehen ist.

Wie in den Figuren 6a und 6c zu sehen ist, ragen die Halteteile 28 abwechselnd zu verschiedenen Seiten vom jeweiligen Halteelement 22 ab. Zudem weisen die Halteteile 28 jeweils eine Einführschräge 43 auf, die das Einschieben der Halteelemente 22 bzw. der Halteteile 28 in die Aufnahmen 24 erleichtern.

Die zu diesem Halteelement 22 korrespondierende Aufnahme 24 kann ich wesentlichen so ausgebildet sein, wie die in den Figuren 4a bis 4c gezeigte Aufnahme 24. Alternativ kann die Breite die Einführabschnitte 34 auch jeweils kleiner ausfallen, da die Halteteile 28 bzw. die Halteelemente eine geringere Breite aufweisen.

Die Halteteile 28 können aber auch nur zu einer Seite von den Halteelementen 22 abstehen.

Statt der in Figur 1 dargestellten durchgehenden Aufnahme 24 ist es auch denkbar, dass für jedes Halteelement 22 eine separate Aufnahme 24 mit jeweils einem Einführabschnitt 34 und einem Halteabschnitt 36 vorgesehen ist.

Die Halteteile 28 können beliebig von den Halteelementen 22 vorstehen. Es ist beispielsweise auch denkbar, dass die Halteteile 28 in Rastrichtung bzw. in Längsrichtung R von den Halteelementen 22 seitlich vorstehen und gewissermaßen Haken bilden, die in Längsrichtung R in die Halteabschnitte 36 eingreifen.

In den hier gezeigten Ausführungsformen ist das Halteelement 22 jeweils am Ansatzteil 16 vorgesehen. Es ist aber auch möglich, dass das Halteelement 22 am Grundkörper 14 und die Aufnahme 24 am Ansatzteil 16 vorgesehen ist.

Das Bauteil, an dem das Halteelement 22 vorgesehen ist, kann auf einfache Weise mit einer Spritzgussform ohne Schieber hergestellt werden, da dieses bei geeigneter Lage der Formtrennebene keine Hinterschnitte aufweist.

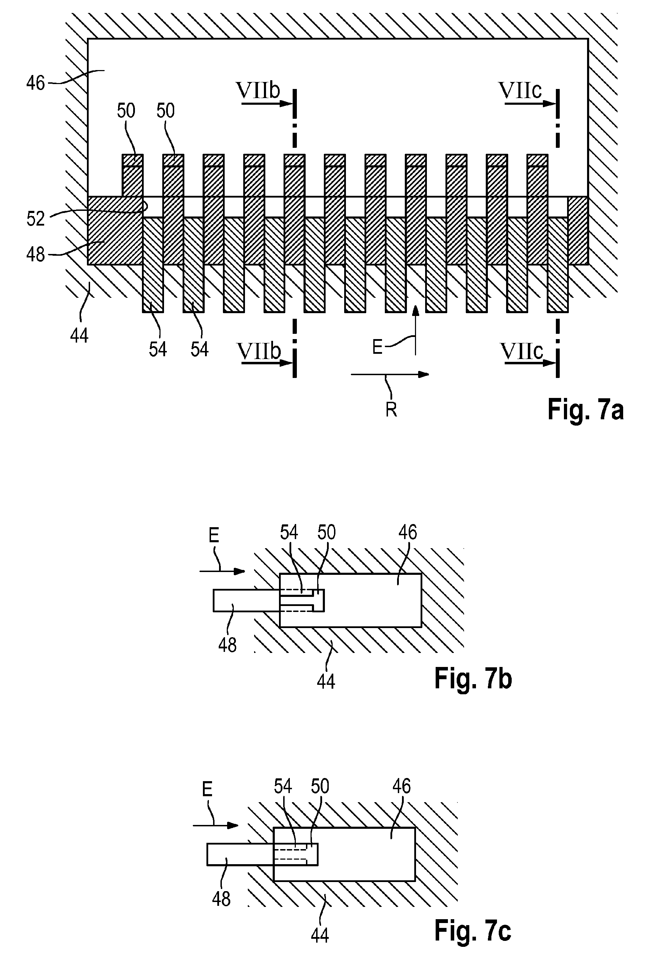

Eine Spritzgussform zur Herstellung eines Bauteils der Lamelle 10, an dem die Aufnahme 24 vorgesehen ist, also meist der Grundkörper, ist in den Figuren 7a bis 7c gezeigt.

Die Spritzgussform 44 definiert einen Hohlraum 46, in den flüssiger Kunststoff eingefüllt werden kann und der das entsprechende Bauteil abbildet. Die Spritzgussform 44 hat ein Formteil 48, das mehrere in den Hohlraum 46 ragende Stege 50 aufweist, die, wie in Figur 7b zu sehen ist, den gleichen Querschnitt aufweisen wie das Halteelement 22 im Bereich der Halteteile 28.

Zwischen den Stegen 50 sind am Formteil 48 Führungen 52 vorgesehen, in welchen Schieber 54 in Einschubrichtung E verschiebbar gelagert sind. Die Schieber 54 haben über die gesamte Länge einen konstanten Querschnitt (Figur 7c). Die Breite B_{S} der Schieber 54 entspricht der Länge L_{E} der Einführabschnitte 34. Die Höhe H der Schieber 54 entspricht durchgehend der Breite B_{E} der Einführabschnitte 34 bzw. im Wesentlichen der Breite B_{T} der Halteteile 28.

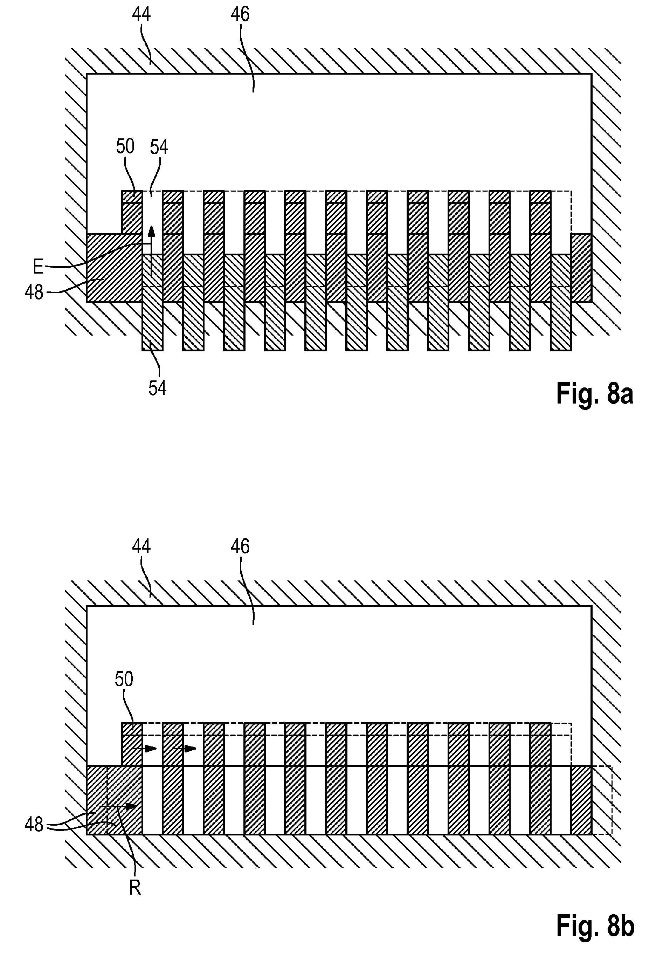

Wie in Figur 8a zu sehen ist, sind die Schieber 54 zwischen einer Entformposition und einer Spritzposition (gestrichelte Linien) verschiebbar. In der Spritzposition ragen die Schieber 54 in den Hohlraum 46 hinein und schließen an der Vorderkante 56 bündig mit den Stegen 50 des Formteils 48 ab.

Das Formteil 48 ist ebenfalls zwischen einer Spritzposition und einer Entformposition in Längsrichtung R verschiebbar (Figur 8b) und bildet somit einen zweiten Schieber.

Zum Spritzgießen des Bauteils werden das Formteil 48 sowie die Schieber 54 in die Spritzposition verfahren. In der Spritzposition befinden sich die Stege 50 des Formteils 48 an den Positionen in der Spritzgussform 44, an denen im fertigen Bauteil die Halteabschnitte 36 vorgesehen sind. Da die Stege 50 die Form der Halteabschnitte 36 aufweisen, werden die Halteabschnitte 36 somit vollständig durch die Stege 50 des Formteils 48 freigehalten.

Die Schieber 54 haben die Form der zwischen den Halteabschnitten 36 liegenden Einführabschnitte 34 und halten diese in der Spritzposition frei.

Die Schieber 54 halten also in Kombination mit dem Formteil 48 die gesamte Aufnahme 24 während des Spritzgussvorgangs frei.

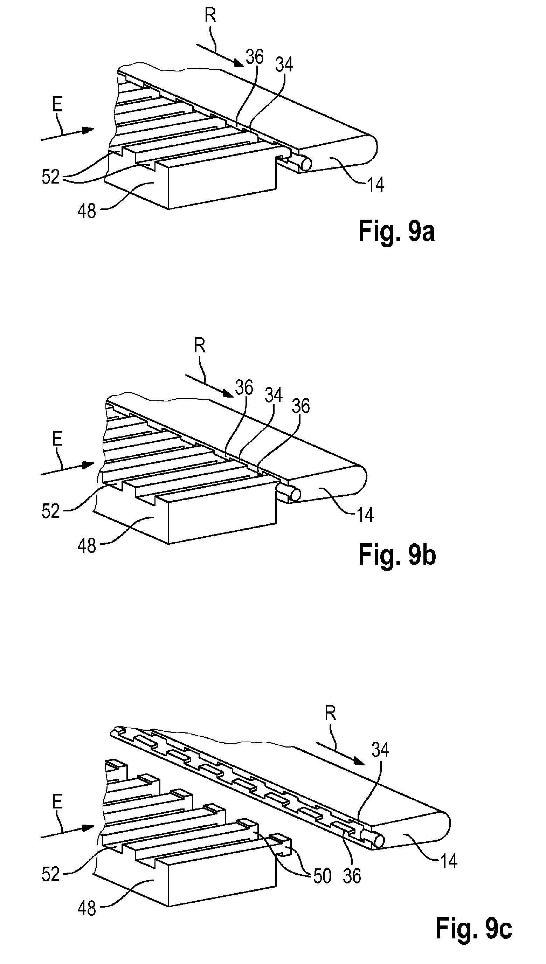

Nach dem Spritzgießen und Aushärten des Kunststoffs können die Schieber 54 entgegen der Einschubrichtung E, die im Wesentlichen senkrecht zur Längsrichtung des Bauteils verläuft, also vom Bauteil weg, aus der Spritzposition in die Entformposition bewegt werden. In dieser Entformposition der Schieber 54 ragen diese nicht mehr in das Bauteil bzw. die Aufnahme 24 hinein, so dass die Einführabschnitte 34 des Bauteils freigegeben sind (Figur 9a).

Anschließend kann das Formteil 48 in Längsrichtung R verschoben werden, sodass die Stege 50 des Formteils 48 aus den Halteabschnitten 36 in die freigegebenen Einführabschnitte 34 gelangen (Figur 9b).

Nachfolgend können die Stege 50 bzw. das Formteil 48 in Einführrichtung E aus der Aufnahme 24 herausbewegt werden, wobei entweder das Formteil 48 entgegen der Einschubrichtung E bewegt oder das Bauteil in Einschubrichtung E entnommen werden kann.

Durch das Formteil 48 ist also in Kombination mit den Schiebern 54 die gesamte Aufnahme 24 inklusive der Hinterschnitte 38 abgebildet, wobei durch die Schieber bzw. das verschiebbare Formteil 48 eine einfache Herstellung des Bauteils bzw. der Aufnahme 24 und eine einfache Entnahme des Bauteils möglich ist.

In der hier gezeigten Ausführungsform der Spritzgussform werden die Einführbereiche vollständig von den Schiebern 54 freigehalten. Es ist aber auch denkbar, dass das Formteil 48 einen in Längsrichtung L die Stege 50 verbindende Schiene aufweist, also im Wesentlichen die Form eines Halteelements 22 mit einer durchgehenden Rippe 26 aufweist. Die Schieber 54 halten in einer solchen Ausführungsform lediglich die Abschnitte der Einführabschnitte 34 frei, die nicht vom Formteil 48 freigehalten werden.

Es ist lediglich sicherzustellen, dass das Formteil 48 und das fertige Bauteil nach dem Aushärten des Kunststoffes und dem Herausziehen der Schieber 54 in Längsrichtung R so bewegt werden kann, dass das Formteil 48 durch die Einführabschnitte 34 des fertigen Bauteils entnommen werden kann.

Das Formteil 48 ist in der gezeigten Ausführungsform als zweiter Schieber ausgebildet, der in Längsrichtung R verschiebbar ist. Es ist aber auch möglich, dass das Formteil 48 feststehend ausgebildet ist und während des Entformvorgangs das Bauteil relativ zum Formteil 48 bewegt wird.

## Patentansprüche

1. Lamelle (10), insbesondere für einen Luftausströmer (12) in einem Fahrzeug, mit einem Grundkörper (14) und einem Ansatzteil (16), die mittels einer mechanischen Verbindung aneinander angebracht sind, **dadurch gekennzeichnet, dass** die mechanische Verbindung zumindest ein Halteelement (22) an einem der beiden Bauteile Grundkörper (14) und Ansatzteil (16) und zumindest eine Aufnahme (24) für das Halteelement (22) an dem anderen der beiden Bauteile enthält, wobei die Aufnahme (24) zumindest einen Einführabschnitt (34), in den das Halteelement (22) in einer Einschubrichtung (E) eingeschoben werden kann, und zumindest einen sich daran anschließenden Halteabschnitt (36) aufweist, in dem das Halteelement (22) fixiert werden kann, wobei sich der Halteabschnitt im wesentlichen senkrecht zur Einschubrichtung (E) an den Einführabschnitt anschließt.

2. Lamelle nach Anspruch 1, **dadurch gekennzeichnet, dass** das Halteelement (22) zumindest ein abstehendes Halteteil (28) aufweist und am Halteabschnitt (36) zumindest ein Hinterschnitt (38) vorgesehen ist, hinter dem das Halteteil (28) eingreifen kann.

3. Lamelle nach Anspruch 1 oder 2, **dadurch gekennzeichnet, dass** der Halteabschnitt (36) seitlich neben dem Einführabschnitt (34) angeordnet ist.

4. Lamelle nach Anspruch 3, **dadurch gekennzeichnet, dass** das Halteelement (22) eine sich in Längsrichtung (R) des Bauteils erstreckende, vorstehende Rippe (26) ist, an der mehrere, insbesondere gleichmäßig verteilte Halteteile (28) vorgesehen sind, und die Aufnahme (24) eine in Längsrichtung (R) verlaufende Nut (32) ist, die mehrere, insbesondere gleichmäßig verteilte Einführabschnitte (34) und Halteabschnitte (36) aufweist, wobei der Abstand der Einführabschnitte (34) dem Abstand der Halteteile (28) entspricht.

5. Lamelle nach Anspruch 3 oder 4, **dadurch gekennzeichnet, dass** die Halteteile (28) seitlich und/oder in Einschubrichtung (E) vom Halteelement (22) abstehen

6. Lamelle nach einem der Ansprüche 3 bis 5, **dadurch gekennzeichnet, dass** benachbarte Halteteile (28) zu verschiedenen Seiten vom Halteelement (22) abstehen.

7. Lamelle nach einem der Ansprüche 3 bis 6, **dadurch gekennzeichnet, dass** die Halteteile (28) eine Einführschräge (43) und/oder eine Rastlasche aufweisen.

8. Lamelle nach einem der Ansprüche 3 bis 7, **dadurch gekennzeichnet, dass** der Einführabschnitt (34) sowie der Halteabschnitt (36) im Wesentlichen eine rechteckige Öffnung aufweisen und/oder das Halteteil (28) einen im Wesentlichen rechteckigen, insbesondere zum Einführabschnitt (34) korrespondierenden Querschnitt aufweist.

9. Lamelle nach einem der Ansprüche 2 bis 8, **dadurch gekennzeichnet, dass** die Breite des Einführabschnitts (34) größer als oder gleich groß ist wie die Breite des Halteteils (28).

10. Lamelle nach einem der vorhergehenden Ansprüche, **dadurch gekennzeichnet, dass** am Halteelement (22) ein Rastelement vorgesehen ist, das in der Aufnahme (24), insbesondere im Halteabschnitt (36), verrasten kann.

11. Lamelle nach einem der vorhergehenden Ansprüche, **dadurch gekennzeichnet, dass** der Grundkörper (14) und/oder das Ansatzteil (16) aus Kunststoff, insbesondere im Spritzgussverfahren, hergestellt ist, und das Ansatzteil (16) eine Oberflächenbeschichtung, insbesondere eine Verchromung aufweist.

12. Verfahren zur Montage einer Lamelle (10) nach einem der vorhergehenden Ansprüche, **dadurch gekennzeichnet, dass** das Halteelement (22) in einer Einschubrichtung (E) in den Einführabschnitt (34) eingeführt und anschließend in einer dazu im Wesentlichen senkrechten Rastrichtung verschoben wird, sodass das Halteelement (22) in den Halteabschnitt (36) gelangt.

13. Verfahren nach Anspruch 12, **dadurch gekennzeichnet, dass** die Rastrichtung (R) im Wesentlichen in Längsrichtung (R) des Grundkörpers (14) und/oder des Ansatzteils (16) verläuft.

14. Spritzgussform zum Spritzgiessen eines der Bauteile Grundkörper (14) oder Ansatzteil (16) der Lamelle (10) nach einem der Ansprüche 1 bis 11, das eine Aufnahme (24) aufweist, mit zumindest einem Formteil (48) und zumindest einem Schieber (54), wobei der Schieber (54) zwischen einer Spritzposition, in der der Schieber (54) gemeinsam mit dem Formteil (48) die Aufnahme (24) freihält, und einer Entformposition verschiebbar ist, wobei das Formteil (48) die Form des Halteelements (22) aufweist und zumindest die Haltebabschnitte (36) freihält, und der Schieber (54) so ausgebildet ist, dass dieser allein oder in Kombination mit dem Formteil (48) die Einführbereiche (34) freihält, wobei der Schieber (54) entgegen der Einschubrichtung (E), im Wesentlichen senkrecht zur Längsrichtung (R) des Bauteils, insbesondere vom Bauteil weg, aus der Spritzposition in die Entformposition bewegbar ist.

15. Spritzgussform nach Anspruch 14, **dadurch gekennzeichnet, dass** das Formteil (48) als zweiter Schieber ausgebildet ist und zwischen einer Spritzposition, in der das Formteil (48) zumindest die Halteabschnitte (36) freihält, und einer Entformposition bewegbar ist, in der das Formteil (48) in die Einführabschnitte (34) eingreift.

16. Spritzgussform nach Anspruch 14 oder 15, **dadurch gekennzeichnet, dass** das Formteil (48) einen konstanten Querschnitt aufweist, der der Form des Halteelements (22) und/oder dem Querschnitt des Halteteils (28) entspricht.

17. Verfahren zur Herstellung eines Bauteils für eine Lamelle (10) nach einem der Ansprüche 1 bis 11, das eine Aufnahme (24) aufweist, mit einer Spritzgussform (44) nach einem der Ansprüche 14 bis 16, mit folgenden Schritten:
- der Schieber (54) wird in die Spritzposition verschoben, in der der Schieber gemeinsam mit dem Formteil (48) die Aufnahme (24) freihält,
- die Spritzgussform (44) wird mit Kunststoff gefüllt,
- nach dem Aushärten des Kunststoffs wird in einem ersten Entformungsschritt der Schieber (54) in die Entformposition verschoben, in der die Einführabschnitte (34) freigegeben sind,
anschließend wird das Formteil (48) oder das Bauteil so in Längsrichtung (R) verschoben, dass das Formteil (48) in die Einführabschnitte (34) eingreift und das Formteil (48) entgegen der Einschubrichtung (E) aus der Aufnahme (24) entnommen.

## Claims

1. A slat (10), in particular for an air vent (12) in a vehicle, comprising a base body (14) and an add-on part (16) which are mounted to each other by means of a mechanical connection, **characterized in that** the mechanical connection contains at least one holding element (22) at one of the two components base body (14) and add-on part (16) and at least one receptacle (24) for the holding element (22) at the other one of the two components, the receptacle (24) including at least one insertion portion (34), into which the holding element (22) can be inserted in an insertion direction (E), and at least one holding portion (36) adjoining it, in which the holding element (22) can be fixed, the holding portion adjoining the insertion portion substantially perpendicularly to the insertion direction (E).

2. The slat according to claim 1, **characterized in that** the holding element (22) includes at least one protruding holding part (28), and provided on the holding portion (36) is at least one undercut (38) behind which the holding part (28) can engage.

3. The slat according to claim 1 or 2, **characterized in that** the holding portion (36) is arranged laterally beside the insertion portion (34).

4. The slat according to claim 3, **characterized in that** the holding element (22) is a protruding rib (26) which extends in the longitudinal direction (R) of the component and which has several, in particular uniformly distributed holding parts (28) provided thereon, and the receptacle (24) is a groove (32) which extends in the longitudinal direction (R) and includes several, in particular uniformly distributed insertion portions (34) and holding portions (36), the distance of the insertion portions (34) corresponding to the distance of the holding parts (28).

5. The slat according to claim 3 or 4, **characterized in that** the holding parts (28) protrude from the holding element (22) laterally and/or in the insertion direction (E).

6. The slat according to any of claims 3 to 5, **characterized in that** adjacent holding parts (28) protrude from the holding element (22) to different sides.

7. The slat according to any of claims 3 to 6, **characterized in that** the holding parts (28) have an insertion bevel (43) and/or a latching tab.

8. The slat according to any of claims 3 to 7, **characterized in that** the insertion portion (34) and the holding portion (36) have a substantially rectangular opening and/or the holding part (28) has a substantially rectangular cross-section corresponding in particular to the insertion portion (34).

9. The slat according to any of claims 2 to 8, **characterized in that** the width of the insertion portion (34) is equal to or larger than the width of the holding part (28).

10. The slat according to any of the preceding claims, **characterized in that** a latching element is provided at the holding element (22) and can snap into place in the receptacle (24), in particular in the holding portion (36).

11. The slat according to any of the preceding claims, **characterized in that** the base body (14) and/or the add-on part (16) is/are made of plastic, in particular by an injection molding process, and the add-on part (16) has a surface coating, in particular a chromium plating.

12. A method of mounting a slat (10) according to any of the preceding claims, **characterized in that** the holding element (22) is introduced into the insertion portion (34) in an insertion direction (E) and subsequently is shifted in a latching direction substantially perpendicular thereto, so that the holding element (22) moves into the holding portion (36).

13. The method according to claim 12, **characterized in that** the latching direction (R) extends substantially in the longitudinal direction (R) of the base body (14) and/or of the add-on part (16).

14. An injection mold for injection molding one of the components base body (14) or add-on part (16) of the slat (10) according to any of claims 1 to 11, which includes a receptacle (24), comprising at least one shaped part (48) and at least one slide (54), the slide (54) being shiftable between an injection position, in which the slide (54) together with the shaped part (48) keeps clear the receptacle (24), and a demolding position, the shaped part (48) having the shape of the holding element (22) and keeping clear at least the holding portions (36), and the slide (54) being formed such that it keeps clear the insertion regions (34) alone or in combination with the shaped part (48), the slide (54) being movable from the injection position to the demolding position against the insertion direction (E), substantially perpendicularly to the longitudinal direction (R) of the component, in particular away from the component.

15. The injection mold according to claim 14, **characterized in that** the shaped part (48) is formed as a second slide and is movable between an injection position, in which the shaped part (48) keeps clear at least the holding portions (36), and a demolding position, in which the shaped part (48) engages in the insertion portions (34).

16. The injection mold according to claim 14 or 15, **characterized in that** the shaped part (48) has a constant cross-section which corresponds to the shape of the holding element (22) and/or the cross-section of the holding part (28).

17. A method of manufacturing a component for a slat (10) according to any of claims 1 to 11, which includes a receptacle (24), with an injection mold (44) according to any of claims 14 to 16, comprising the following steps:
- the slide (54) is shifted to the injection position, in which the slide jointly with the shaped part (48) keeps clear the receptacle (24),
- the injection mold (44) is filled with plastic,
- after curing of the plastic, the slide (54) is shifted, in a first demolding step, to the demolding position, in which the insertion portions (34) are cleared,
subsequently, the shaped part (48) or the component is shifted in the longitudinal direction (R) such that the shaped part (48) engages in the insertion portions (34), and the shaped part (48) is removed from the receptacle (24) against the insertion direction (E).

## Revendications

1. Lamelle (10), en particulier pour un diffuseur d'air (12) dans un véhicule, comportant un corps de base (14) et une partie rajoutée (16) qui sont montés l'un sur l'autre au moyen d'une liaison mécanique, **caractérisée en ce que** la liaison mécanique comprend au moins un élément de retenue (22) sur l'un des deux composants corps de base (14) et partie rajoutée (16) et au moins un logement (24) pour l'élément de retenue (22) sur l'autre des deux composants, le logement (24) présentant au moins un tronçon d'insertion (34) dans lequel l'élément de retenue (22) peut être inséré dans un sens d'insertion (E), et au moins un tronçon de retenue (36) se joignant à celui-ci et dans lequel l'élément de retenue (22) peut être fixé, le tronçon de retenue se joignant au tronçon d'insertion sensiblement perpendiculairement au sens d'insertion (E).

2. Lamelle selon la revendication 1, **caractérisée en ce que** l'élément de retenue (22) présente au moins une pièce de retenue (28) en saillie et **en ce qu'**il est prévu au moins une dépouille (38) sur le tronçon de retenue (36), derrière laquelle la pièce de retenue (28) peut s'engager.

3. Lamelle selon la revendication 1 ou 2, **caractérisée en ce que** le tronçon de retenue (36) est agencé latéralement à côté du tronçon d'insertion (34).

4. Lamelle selon la revendication 3, **caractérisée en ce que** l'élément de retenue (22) est une nervure (26) en saillie qui s'étend dans le sens longitudinal (R) du composant et sur laquelle il est prévu plusieurs pièces de retenue (28) qui sont en particulier régulièrement réparties, et **en ce que** le logement (24) est une gorge (32) qui s'étend dans le sens longitudinal (R) et qui présente plusieurs tronçons d'insertion (34) et plusieurs tronçons de retenue (36) qui sont en particulier régulièrement répartis, l'écart des tronçons d'insertion (34) correspondant à l'écart des pièces de retenue (28).

5. Lamelle selon la revendication 3 ou 4, **caractérisée en ce que** les pièces de retenue (28) font saillie de l'élément de retenue (22) latéralement et/ou dans le sens d'insertion (E).

6. Lamelle selon l'une des revendications 3 à 5, **caractérisée en ce que** des pièces de retenue (28) voisines font saillie de l'élément de retenue (22) vers des différents côtés.

7. Lamelle selon l'une des revendications 3 à 6, **caractérisée en ce que** les pièces de retenue (28) présentent un chanfrein d'insertion (43) et/ou une patte d'enclenchement.

8. Lamelle selon l'une des revendications 3 à 7, **caractérisée en ce que** le tronçon d'insertion (34) et le tronçon de retenue (36) présentent une ouverture sensiblement rectangulaire et/ou **en ce que** la pièce de retenue (28) présente une section transversale sensiblement rectangulaire et correspondant en particulier au tronçon d'insertion (34).

9. Lamelle selon l'une des revendications 2 à 8, **caractérisée en ce que** la largeur du tronçon d'insertion (34) est supérieure ou égale à la largeur de la pièce de retenue (28).

10. Lamelle selon l'une des revendications précédentes, **caractérisée en ce qu'**un élément d'enclenchement qui est apte à s'enclencher dans le logement (24), en particulier dans le tronçon de retenue (36) est prévu sur l'élément de retenue (22).

11. Lamelle selon l'une des revendications précédentes, **caractérisée en ce que** le corps de base (14) et/ou la partie rajoutée (16) est réalisé(e) en matière plastique, en particulier selon un procédé de moulage par injection, et **en ce que** la partie rajoutée (16) présente un revêtement de surface, en particulier un chromage.

12. Procédé de montage d'une lamelle (10) selon l'une des revendications précédentes, **caractérisé en ce que** l'élément de retenue (22) est inséré dans le tronçon d'insertion (34) selon un sens d'insertion (E) et est ensuite déplacé dans un sens d'enclenchement sensiblement perpendiculaire à celui-ci de sorte que l'élément de retenue (22) parvient dans le tronçon de retenue (36).

13. Procédé selon la revendication 12, **caractérisé en ce que** le sens d'enclenchement (R) s'étend sensiblement dans le sens longitudinal (R) du corps de base (14) et/ou de la partie rajoutée (16).

14. Moule de moulage par injection pour le moulage par injection de l'un des composants corps de base (14) ou partie rajoutée (16) de la lamelle (10) selon l'une des revendications 1 à 11 qui présente un logement (24), comportant au moins une pièce moulée (48) et au moins un coulisseau (54), le coulisseau (54) étant déplaçable entre une position d'injection dans laquelle le coulisseau (54) laisse le logement libre (24) ensemble avec la pièce moulée (48), et une position de démoulage, la pièce moulée (48) présentant la forme de l'élément de retenue (22) et laissant au moins les tronçons de retenue (36) libres, et le coulisseau (54) étant réalisé de telle sorte que celui-ci laisse seul ou en combinaison avec la pièce moulée (48) les zones d'insertion (34) libres, le coulisseau (54) étant apte à être déplacé hors de la position d'injection vers la position de démoulage à l'encontre du sens d'insertion (E), sensiblement perpendiculairement au sens longitudinal (R) du composant, en particulier en éloignement du composant.

15. Moule de moulage par injection selon la revendication 14, **caractérisé en ce que** la pièce moulée (48) est réalisée sous forme de deuxième coulisseau et est apte à être déplacée entre une position d'injection dans laquelle la pièce moulée (48) laisse au moins les tronçons de retenue (36) libres, et une position de démoulage dans laquelle la pièce moulée (48) s'engage dans les tronçons d'insertion (34).

16. Moule de moulage par injection selon la revendication 14 ou 15, **caractérisé en ce que** la pièce moulée (48) présente une section transversale constante qui correspond à la forme de l'élément de retenue (22) et/ou à la section transversale de la pièce de retenue (28).

17. Procédé de fabrication d'un composant pour une lamelle (10) selon l'une des revendications 1 à 11 qui présente un logement (24) au moyen d'un moule de moulage par injection (44) selon l'une des revendications 14 à 16, le procédé comportant les étapes suivantes :
- le coulisseau (54) est déplacé vers la position d'injection dans laquelle le coulisseau laisse le logement (24) libre ensemble avec la pièce moulée (48),
- le moule de moulage par injection (44) est rempli de matière plastique,
- après le durcissement de la matière plastique, le coulisseau (54) est déplacé dans une première étape de démoulage vers la position de démoulage dans laquelle les tronçons d'insertion (34) sont libres,
la pièce moulée (48) ou le composant est ensuite déplacé(e) dans le sens longitudinal (R) de telle sorte que la pièce moulée (48) s'engage dans les tronçons d'insertion (34), et la pièce moulée (48) est extraite du logement (24) à l'encontre du sens d'insertion (E).
